# EUROPEAN PATENT SPECIFICATION

(11) **EP 1 434 914 B1**
(45) Date of publication and mention of the grant of the patent: **12.04.2006**
(21) Application number: 02761752.1
(22) Date of filing: 19.09.2002
(51) Int. Cl.: D07B 1/22, D07B 1/16

(54) **ELEVATOR BELT ASSEMBLY WITH NOISE REDUCING GROOVE ARRANGEMENT**
AUFZUGSRIEMEN MIT GERÄUSCHREDUZIERENDER NUTENANORDNUNG
ENSEMBLE DE COURROIE D'ASCENSEUR DONT L'ARRANGEMENT DES RAINURES A POUR EFFET DE REDUIRE LE BRUIT

(30) Priority: 04.10.2001 US 970587
(43) Date of publication of application: 07.07.2004
(73) Proprietor: OTIS ELEVATOR COMPANY, Farmington, CT 06032-2568 (US)
(72) Inventor: PITTS, John, Avon, CT 06001 (US); SWAYBILL, Bruce, Farmington, CT 06032 (US); DERWINSKI, Patricia, A., Farmington, CT 06032 (US); O'DONNELL, Hugh, James, Longmeadow, MA 01106 (US)
(74) Representative: Samuels, Adrian James
(86) International application number: PCT/US2002/029817
(87) International publication number: WO 2003/029556

(56) References cited:
- EP-A- 0 520 781
- WO-A-00/37738
- DE-A- 4 016 469
- US-A- 5 055 090
- US-A- 5 382 198

## Description

### BACKGROUND OF THE INVENTION

This invention generally relates to load bearing members for use in elevator systems. More particularly, this invention relates to an elevator belt assembly having a specialized groove arrangement.

Elevator systems typically include a cab and counterweight that move within a hoistway to transport passengers or cargo to different landings within a building, for example. A load bearing member, such as roping or a belt typically moves over a set of sheaves and supports the load of the cab and counterweight. There are a variety of types of load bearing members used in elevator systems.

One type of load bearing member is a coated steel belt. Typical arrangements include a plurality of steel cords extending along the length of the belt assembly. A jacket is applied over the cords and forms an exterior of the belt assembly. Some jacket application processes result in grooves being formed in the jacket surface on at least one side of the belt assembly. Some processes also tend to cause distortions or irregularities in the position of the steel cords relative to the exterior of the jacket along the length of the belt.

Figure 8, for example, illustrates both of these phenomena. As can be seen, the spacing between the exterior of the jacket 200 and the cords 210 varies along the length of the belt. As can be appreciated from the illustration, the cords 210 are set within the jacket as if they comprise a series of cord segments of equal length corresponding to the groove spacing. The illustration of Figure 8 includes an exaggeration of the typical physical cord layout for purposes of illustration. The actual distortions or changes in the position of the cords relative to the jacket outer surfaces may not be discernable by the human eye in some examples.

When conventional jacket application processes are used, the manner in which the cords are supported during the jacket application process tends to result in such distortion in the geometry or configuration of the cords relative to the jacket outer surfaces along the length of the belt.

While such arrangements have proven useful, there is need for improvement. One particular difficulty associated with such belt assemblies is that as the belt moves in the elevator system, the grooves and the cord placement in the jacket interact with other system components such as the sheaves and generate undesirable noise, vibration or both. For example, as the belt assembly moves at a constant velocity, a steady state frequency of groove contact with the sheaves creates an annoying, audible tone. The repeated pattern of changes in the cord spacing from the jacket outer surfaces is believed to contribute to such noise generation.

An alternative arrangement is required to minimize or eliminate the occurrence of vibrations or an annoying tone during elevator system operation. This invention addresses that need.

### SUMMARY OF THE INVENTION

In general terms, this invention is a belt assembly for use in an elevator system. The belt assembly includes a plurality of cords extending generally parallel to a longitudinal axis of the belt. A jacket over the cords includes a plurality of grooves that are situated to minimize the occurrence of an annoying audible tone during elevator operation.

In one example, the grooves are longitudinally spaced such that spacings between the grooves varies along the length of the belt. Having different spacings between adjacent grooves eliminates the steady state frequency of groove contact with other system components, which is a major contributor to the potential for undesirable noise or vibration during elevator operation.

In another example, the grooves extend across the width of the jacket. At least a portion of each of the grooves is aligned to be not perpendicular to the longitudinal axis of the belt. In one example, the grooves comprise straight lines. In another example, the grooves comprise a series of line segments, each of which is at a different angle relative to the longitudinal axis of the belt.

A belt assembly designed according to this invention may include the inventive different spacings, the inventive angular alignment of the grooves or a combination of both. The various features and advantages of this invention will become apparent to those skilled in the art from the following detailed description of the currently preferred embodiments. The drawings that accompany the detailed description can be briefly described as follows.

### BRIEF DESCRIPTION OF THE DRAWINGS

Figure I schematically illustrates a portion of an example belt assembly designed according to an embodiment of this invention.

Figure 2 is a cross-sectional illustration taken along the lines 2-2 in Figure 1.

Figure 3 is a planar, schematic illustration of an alternative groove alignment compared to the embodiment of Figure 1.

Figure 4 schematically illustrates another alternative groove alignment.

Figure 5 schematically illustrates another alternative groove alignment.

Figure 6 schematically illustrates another alternative groove alignment.

Figure 7 schematically illustrates a device and method useful for making a belt assembly designed according to an embodiment of this invention.

Figure 8 schematically illustrates a typical cord geometry relative to outer surfaces on a belt jacket according to the prior art.

### DETAILED DESCRIPTION OF THE PREFERRED EMBODIMENTS

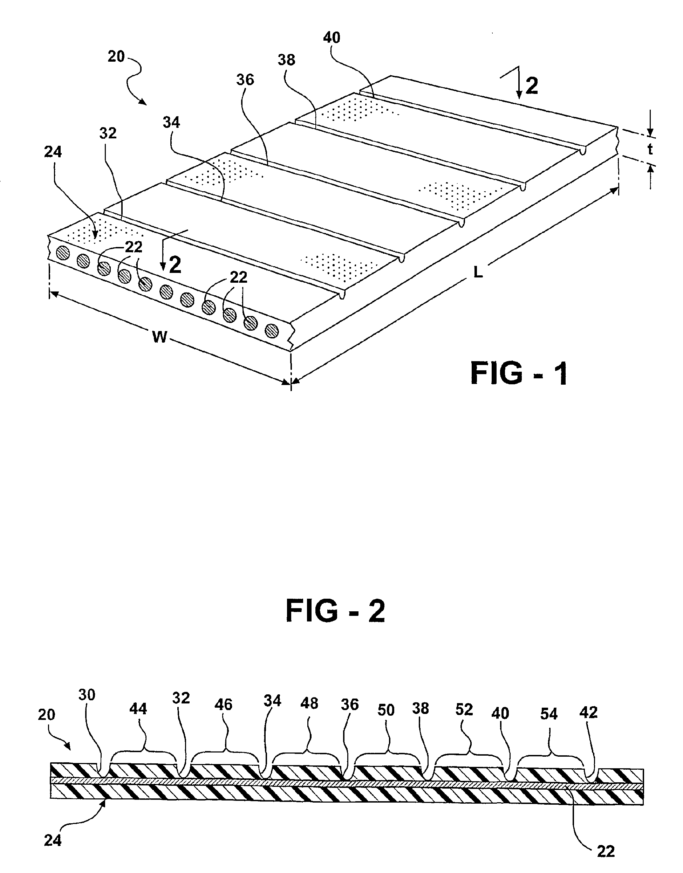

Figures 1 and 2 schematically illustrate a belt assembly 20 that is designed for use in an elevator system. A plurality of cords 22 are aligned generally parallel to a longitudinal axis of the belt assembly 20. In one example, the cords 22 are made of strands of steel wire.

A jacket 24 covers over the cords 22. The jacket 24 preferably comprises a polyurethane-based material. A variety of such materials are commercially available and known in the art to be useful for elevator belt assemblies. Given this description, those skilled in the art will be able to select a proper jacket material to suit the needs of their particular situation.

The jacket 24 establishes an exterior length, L, width, W, and a thickness, t, of the belt assembly 20. In one example, the width W of the belt assembly is 30 millimeters, the thickness t is 3 millimeters and the depth of each groove is 0.7 millimeters. In the same example, the cords 22 have a diameter of 1.65 millimeters. The cords 22 preferably extend along the entire length L of the assembly.

The jacket 24 includes a plurality of grooves 30, 32, 34, 36, 38, 40 and 42 on at least one side of the jacket 24. In the illustrated example, the grooves extend across the entire width of the belt assembly.

The grooves result from some manufacturing processes, many of which are well known in the art, that are suitable for formation of the belt assembly 20. In the example embodiment of Figures 1 and 2, the grooves are spaced apart different distances so that there are different spacings between various grooves. For example, a first spacing 44 separates the groove 30 from the adjacent groove 32. A different spacing 46 separates the groove 32 from the adjacent groove 34. Similarly, the spacings 48, 50, 52 and 54 vary in size.

It is not necessary that all of the illustrated spacings are different, however, it is preferred to provide as many different spacings along the length of the belt assembly as possible. As a practical matter, a repeated pattern of the varying spacings will typically extend along the entire length of the belt assembly 20. Depending on the particulars of the belt assembly and the equipment used to form and apply the jacket 24, the pattern of different spacings will repeat at different intervals. Preferably, the interval of pattern repetition will be as large as the manufacturing equipment allows. In one example, there is a pattern of different spacings that repeats about every two meters. Within each two meter section, the spacings between adjacent grooves are selected to be varying and non-periodic.

By altering spacings between adjacent grooves, the noise component, caused by contact of the belt assembly with other elevator system components, such as the sheaves, during system operation, is spread over a broader range of frequencies. Thus, steady state frequencies of noise are avoided which eliminates the potential for an audible, annoying tone.

In addition to varying the spacing between the grooves, the inventive arrangement provides the ability to vary the lengths of cord "segments," which result from certain manufacturing techniques (but are not necessarily included in the inventive arrangement). A belt assembly designed according to this invention may include a series of cord segments along which the distance between the cord and the jacket outer surfaces varies. The ends of such cord "segments" coincide with the location of the grooves. Varying the spacing of the grooves also varies the length of the segments and therefore varies the pattern of the cord geometry relative to the jacket outer surfaces. With the inventive arrangement, the length of the cord segments varies along the length of the belt.

Because the segments are of various lengths, there is no periodic, repeated geometric pattern of the cords relative to the jacket outer surfaces. By varying the length of the cord segments (i.e., changing spacing between similar distortions in the position of the cord relative to the jacket outer surfaces) any contribution to noise or vibration caused by the cord geometry, is reduced or eliminated.

By eliminating the periodic feature of the cord geometry, this invention provides a significant advantage for reducing vibration and noise generation during elevator system operation.

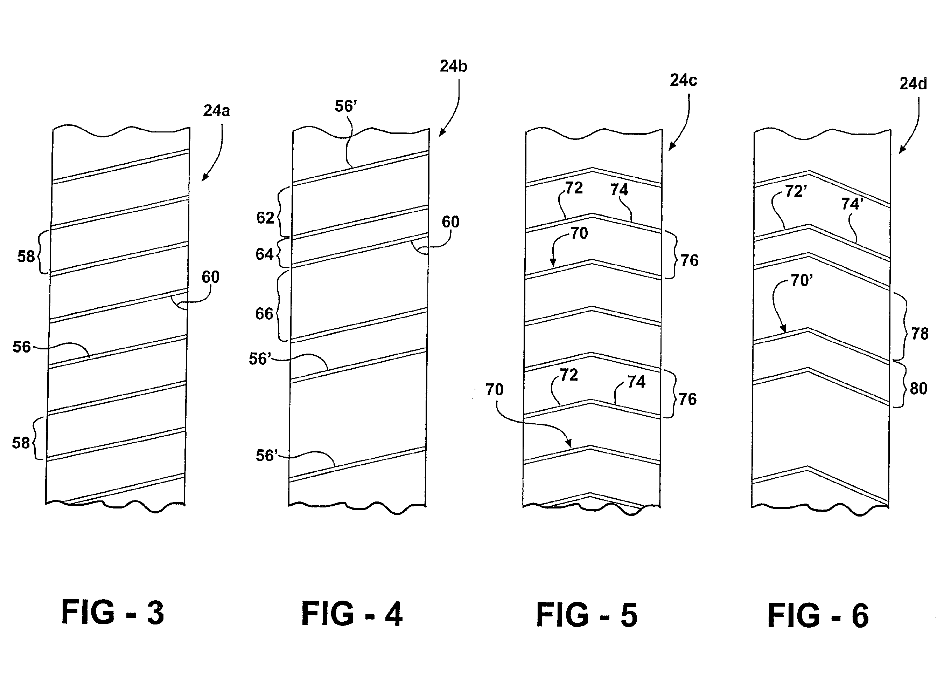

Figures 3 through 6 illustrate various strategies according to this invention for avoiding noise levels caused by belt movement during elevator operation. The example of Figure 3 includes a jacket 24a having a plurality of grooves 56. In this example, an equal spacing 58 separates adjacent grooves 56. The grooves 56 comprise straight lines extending across the width of the belt assembly. Each groove 56 is at an acute angle 60 relative to the longitudinal axis of the belt. Whether the angle of groove alignment is acute or obtuse depends only on a frame of reference. Arranging at least a portion of the grooves 56 to be non-perpendicular to the longitudinal axis of the belt avoids the steady state frequency of noise generation, that otherwise occurs when perpendicularly aligned grooves (and associated cord distortions) are equally spaced along the length of the belt.

The example of Figure 4 includes a jacket 24b having a plurality of grooves 56'. The grooves 56' are spaced apart using different spacings 62, 64 and 66, for example. The grooves 56' are aligned at an acute angle 60 relative to the longitudinal axis of the belt. The example of Figure 4 combines the inventive angular alignment of the grooves with the inventive varying spacing strategy, either or both of which can be employed in the present invention.

Figure 5 illustrates another example belt assembly having a jacket 24c. In this example, a plurality of grooves 70 each have a plurality of line segments 72 and 74. In the example of Figure 5, the grooves 70 are equally spaced using a spacing 76. Because the line segments 72 and 74 are not perpendicular to the longitudinal axis of the belt, the equal spacing does not present the noise generation difficulties provided if the grooves 70 were straight lines that were perpendicular to the longitudinal axis of the belt.

The example of Figure 6 includes a jacket 24d that has a plurality of grooves 70', each of which includes line segments 72' and 74'. In this example, different spacings 78 and 80, for example, separate each of the grooves from an adjacent groove.

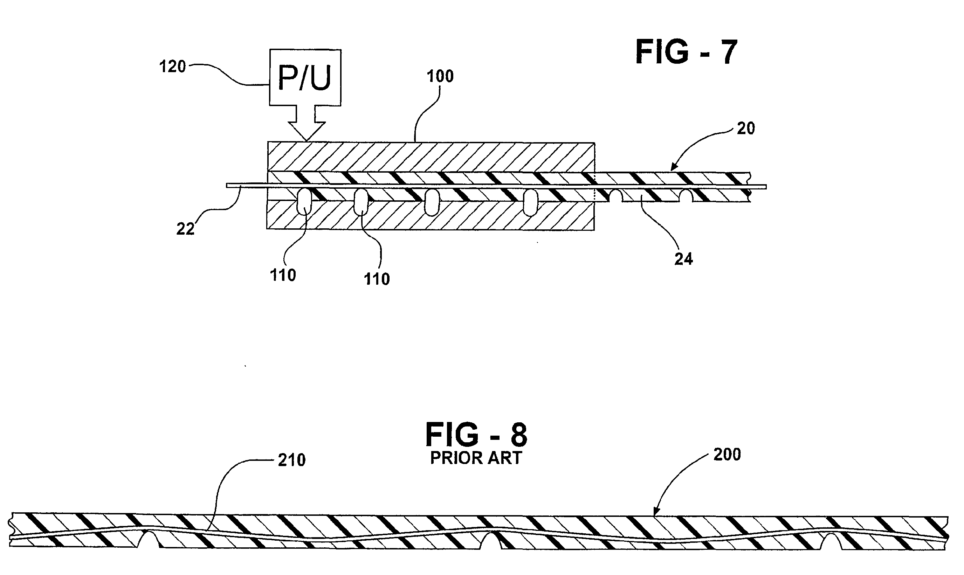

With reference to Figure 7, the process of making an elevator belt assembly designed according to this invention is schematically illustrated by machinery 100. The cords 22 move through the machinery 100 which provides a mold for forming the jacket 24.

The machinery 100 includes a plurality of cord supports 110. In the case of forming the belt assemblies of Figures 1, 4 and 6, the spacing between the cord supports is variable. Although the spacing between two adjacent cord supports 110 may be the same, it is preferred that the spacing between the cord supports 110 not be arranged in a repeating pattern. Preferably, the spacing should be randomized within an acceptable range that will depend on the machinery.

As the cords 22 are fed through the machinery 100 they are supported on each of the cord supports. In examples where the cords 22 are fed continuously, the cord supports 110 move as the cords 22 are fed through the machinery 100. A polyurethane-based jacket material is fed into the machinery from a reservoir 122 in a conventional manner. As the jacket material envelopes the cords 22, the cord supports cause grooves to be formed in the jacket. The machinery preferably causes an opposite side of the jacket 24 to be flat. The machinery 100 operates in a known manner to extrude, mold or otherwise form the jacket 24 around the cords 22.

Providing different spacing between the cord supports yields different spacing between the grooves along the length of the belt.

In another example, as in forming the belt assemblies of Figures 3-6, the cord supports have a configuration that provides a desired groove alignment on the exterior surface of the jacket 24. Example groove configurations and alignments are shown in Figures 3-6, but this invention is not limited to those examples.

By placing the grooves in a desired alignment, the difficulties of audible noise generation experienced with conventional coated belt assemblies can be at least greatly reduced and usually eliminated. Providing different spacings between grooves or a properly selected angular alignment of at least a part of each groove, or a combination of both results in a much quieter arrangement.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. An elevator belt assembly (20), comprising:
a plurality of cords (22) aligned generally parallel to a longitudinal axis of the belt; and
a jacket (24) over the cords, the jacket including a plurality of grooves (30-42) that are spaced longitudinally on at least one side of the jacket that spacings (44-54) between , **characterised in,** adjacent grooves vary along a length of the belt assembly.

2. The assembly (20) of claim 1, wherein three sequential ones of the spacings (44, 46, 48) between the grooves (30, 32, 34) are all different from one another.

3. The assembly of claim 1 or 2, wherein the grooves (56, 70) extend across the width of the jacket (24) and wherein at least a portion of each of the grooves is aligned not perpendicular to the longitudinal axis of the belt.

4. The assembly (20) of claim 1 or 2, wherein the grooves (30-42) extend across the width of the jacket (24) and wherein the grooves are aligned generally perpendicular to the longtudinal axis of the belt.

5. The assembly of claim 1, 2 or 3, wherein each groove (70) comprises a plurality of line segments (72, 74) and at least one of the segments is at a non-right angle relative to the longitudinal axis of the belt.

6. The assembly of claim 3, wherein the grooves extend across the width of the jacket and wherein each groove comprises a plurality of line segments, wherein at least one of the segments is at an acute angle relative to the longitudinal axis of the belt.

7. The assembly of claim 6, wherein each line segment (72, 74) of a particular one of the grooves (70) is at a different angle relative to the longitudinal axis.

8. The assembly of claim 3, wherein the grooves (56) extend across the width of the jacket (24) and wherein each groove comprises a generally straight line.

9. The assembly of any preceding claim, wherein the cords (22) comprise steel wires and the jacket (24) comprises as elastomer.

10. The assembly of claim 9, wherein the elastomer comprises polyurethane.

11. A method of making an elevator belt assembly having a plurality of cords (22) within a jacket (24), comprising the steps of:
(a) aligning the plurality of cords in a selected arrangement; and
(b) applying the jacket to the cords while supporting the cords using cord supports (110) that cause the applied jacket to include a plurality of longitudinally spaced grooves (56'; 70') that are formed in the jacket, where the cord supports are oriented such that the grooves are disposed at least in part at a non-right angle to the longitudinal axis, and spaced at varying longitudinal intervals.

12. The method of claim 11 including spacing the grooves (56') such that three sequential spacings (62, 64, 66) between the grooves (56') are all different from each other.

13. The method of claim 11 or 12 wherein at least a portion of each of the grooves (56'; 70') is aligned at an acute angle to the longitudinal axis of the belt.

14. An elevator belt, comprising:
a plurality of cords (22) aligned generally parallel to a longitudinal axis of the belt; and
a jacket (24) over the cords and having a plurality of longitudinally spaced grooves (56'; 70') that penetrate a side of the jacket, **characterised in that,** the grooves being
disposed in part at a non-right angle to the longitudinal axis, and
spaced at varying longitudinal intervals.

15. The elevator belt (20) of claim 14, wherein three sequential ones of the longitudinal intervals (62, 64, 66) are all different from each other.

16. The elevator belt of claim 14 or 15, wherein a first portion (72) of each groove is disposed at a first non-right angle to the longitudinal axis and a second portion (74) of each groove is disposed at a second non-right angle to the longitudinal axis.

## Patentansprüche

1. Aufzuggurtanordnung (20), aufweisend:
eine Mehrzahl von Strängen (22), die allgemein parallel zu einer Längsachse des Gurtes ausgerichtet sind; und
einen Mantel (24) über den Strängen, wobei der Mantel eine Mehrzahl von Nuten (30 bis 42) aufweist, die auf wenigstens einer Seite des Mantels in Längsrichtung voneinander beabstandet sind,
**dadurch gekennzeichnet, dass** Abstände (44, 54) zwischen einander benachbarten Nuten entlang einer Länge der Gurtanordnung variieren.

2. Anordnung (20) nach Anspruch 1,
wobei drei aufeinander folgende Abstände (44, 46, 48) der Beabstandungen zwischen den Nuten (30, 32, 34) alle voneinander verschieden sind.

3. Anordnung nach Anspruch 1 oder 2,
wobei sich die Nuten (56, 70) über die Breite des Mantels (24) erstrecken und
wobei zumindest ein Bereich einer jeden der Nuten derart ausgerichtet ist, dass er nicht rechtwinklig zu der Längsachse des Gurtes verläuft.

4. Anordnung (20) nach Anspruch 1 oder 2,
wobei sich die Nuten (30 bis 42) über die Breite des Mantels (24) erstrecken und wobei die Nuten allgemein rechtwinklig zu der Längsachse des Gurtes ausgerichtet sind.

5. Anordnung nach Anspruch 1, 2 oder 3,
wobei jede Nut (70) eine Mehrzahl von Liniensegmenten (72, 74) aufweist und zumindest eines der Segmente nicht in einem rechten Winkel relativ zu der Längsachse des Gurts angeordnet ist.

6. Anordnung nach Anspruch 3,
wobei sich die Nuten über die Breite des Mantels erstrecken und wobei jede Nut eine Mehrzahl von Liniensegmenten aufweist, wobei wenigstens eines der Segmente in einem spitzen Winkel relativ zu der Längsachse des Gurtes angeordnet ist.

7. Anordnung nach Anspruch 6,
wobei jedes Liniensegment (72, 74) einer jeweiligen Nut (70) in einem anderen Winkel relativ zu der Längsachse angeordnet ist.

8. Anordnung nach Anspruch 3,
wobei sich die Nuten (56) über die Breite des Mantels (24) erstrecken und wobei jede Nut in Form einer im Allgemeinen geraden Linie ausgebildet ist.

9. Anordnung nach einem der vorausgehenden Ansprüche,
wobei die Stränge (22) Stahldrähte aufweisen und der Mantel (24) ein Elastomer aufweist.

10. Anordnung nach Anspruch 9,
wobei das Elastomer Polyurethan aufweist.

11. Verfahren zum Herstellen einer Aufzuggurtanordnung mit einer Mehrzahl von Strängen (22) in einem Mantel (24), wobei das Verfahren folgende Schritte aufweist:
(a) Ausrichten der Mehrzahl von Strängen in einer ausgewählten Anordnung; und
(b) Aufbringen des Mantels auf die Stränge unter Abstützung der Stränge unter Verwendung von Strangabstützeinrichtungen (110), die dazu führen, dass der aufgebrachte Mantel eine Mehrzahl von in dem Mantel gebildeten, in Längsrichtung voneinander beabstandeten Nuten (56' bis 70') aufweist, wobei die Strangabstützeinrichtungen derart orientiert werden, dass die Nuten zumindest teilweise nicht in einem rechten Winkel zu der Längsachse angeordnet werden sowie in unterschiedlichen Intervallen in Längsrichtung voneinander beabstandet werden.

12. Verfahren nach Anspruch 11, wobei die Nuten (56') derart voneinander beabstandet werden, dass drei aufeinander folgende Abstände (62, 64, 66) zwischen den Nuten (56') alle voneinander verschieden sind.

13. Verfahren nach Anspruch 11 oder 12,
wobei zumindest ein Teil jeder der Nuten (56'; 70') in einem spitzen Winkel zu der Längsachse des Gurtes ausgerichtet wird.

14. Aufzuggurt, aufweisend:
eine Mehrzahl von Strängen (22), die allgemein parallel zu einer Längsachse des Gurtes ausgerichtet sind; und
einen Mantel (24) über den Strängen, der eine Mehrzahl von in Längsrichtung voneinander beabstandeten Nuten (56'; 70') aufweist, die in eine Seite des Mantels eingebracht sind,
**dadurch gekennzeichnet, dass** die Nuten teilweise nicht in einem rechten Winkel zu der Längsachse angeordnet sind sowie in unterschiedlichen Intervallen in Längsrichtung voneinander beabstandet sind.

15. Aufzuggurt (20) nach Anspruch 14,
wobei drei aufeinander folgende Intervalle der in Längsrichtung vorhandenen Intervalle (62, 64, 66) alle voneinander verschieden sind.

16. Aufzuggurt nach Anspruch 14 oder 15,
wobei ein erster Bereich (22) jeder Nut in einem ersten, nicht rechten Winkel zu der Längsachse angeordnet ist und ein zweiter Bereich (74) jeder Nut in einem zweiten nicht rechten Winkel zu der Längsachse angeordnet ist.

## Revendications

1. Ensemble formant courroie d'ascenseur (20), comprenant :
une pluralité fils câblés (22) alignés globalement parallèlement à un axe longitudinal de la courroie ; et
une enveloppe (24) par-dessus les fils câblés, l'enveloppe comprenant une pluralité de rainures (30 à 42) qui sont espacées longitudinalement sur au moins un côté de l'enveloppe, **caractérisé en ce que** les espacements (44 à 54) entre les rainures adjacentes varient sur la longueur de l'ensemble formant courroie.

2. Ensemble (20) selon la revendication 1, dans lequel trois espacements consécutifs (44, 46, 48) entre les rainures (30, 32, 34) sont tous différents les uns des autres.

3. Ensemble selon la revendication 1 ou 2, dans lequel les rainures (56, 70) s'étendent à travers la largeur de l'enveloppe (24), et dans lequel au moins une partie de chacune des rainures n'est pas alignée perpendiculairement à l'axe longitudinal de la courroie.

4. Ensemble (20) selon la revendication 1 ou 2, dans lequel les rainures (30 à 42) s'étendent à travers la largeur de l'enveloppe (24), et dans lequel les rainures sont alignées globalement perpendiculairement à l'axe longitudinal de la courroie.

5. Ensemble selon la revendication 1, 2 ou 3, dans lequel chaque rainure (70) comprend une pluralité de segments linéaires (72, 74) et au moins l'un des segments est à un angle non droit par rapport à l'axe longitudinal de la courroie.

6. Ensemble selon la revendication 3, dans lequel les rainures s'étendent à travers la largeur de l'enveloppe, et dans lequel chaque rainure comprend une pluralité de segments linéaires, dans lequel au moins l'un des segments est à un angle aigu par rapport à l'axe longitudinal de la courroie.

7. Ensemble selon la revendication 6, dans lequel chaque segment linéaire (72, 74) d'une rainure particulière (70) est à un angle différent par rapport à l'axe longitudinal.

8. Ensemble selon la revendication 3, dans lequel les rainures (56) s'étendent à travers la largeur de l'enveloppe (24), et dans lequel chaque rainure comprend une ligne globalement droite.

9. Ensemble selon l'une quelconque des revendications précédentes, dans lequel les fils câblés (22) comprennent des fils d'acier et l'enveloppe (24) comprend un élastomère.

10. Ensemble selon la revendication 9, dans lequel l'élastomère comprend du polyuréthane.

11. Procédé de fabrication d'un ensemble formant courroie d'ascenseur comportant une pluralité de fils câblés (22) à l'intérieur d'une enveloppe (24), comprenant les étapes consistant à :
(a) aligner la pluralité de fils câblés selon une disposition choisie ; et
(b) appliquer l'enveloppe sur les fils câblés tout en supportant les fils câblés au moyen de supports de fils câblés (110) qui amènent l'enveloppe appliquée à comprendre une pluralité de rainures espacées longitudinalement (56' ; 70') qui sont formées dans l'enveloppe, où les supports de fils câblés sont orientés de sorte que les rainures sont
disposées au moins en partie à un angle non droit par rapport à l'axe longitudinal, et
espacées à des intervalles longitudinaux variables.

12. Procédé selon la revendication 11 comprenant l'espacement des rainures (56') de sorte que trois espacements consécutifs (62, 64, 66) entre les rainures (56') sont tous différents les uns des autres.

13. Procédé selon la revendication 11 ou 12, dans lequel au moins une partie de chacune des rainures (56' ; 70') est alignée à un angle aigu par rapport à l'axe longitudinal de la courroie.

14. Courroie d'ascenseur comprenant :
une pluralité de fils câblés (22) alignés globalement parallèlement à un axe longitudinal de la courroie ; et
une enveloppe (24) par-dessus les fils câblés et comportant une pluralité de rainures espacées longitudinalement (56' ; 70') qui pénètrent un côté de l'enveloppe, **caractérisée en ce que** les rainures sont
disposées en partie à un angle non droit par rapport à l'axe longitudinal, et
espacées à des intervalles longitudinaux variables.

15. Courroie d'ascenseur (20) selon la revendication 14, dans laquelle trois intervalles longitudinaux consécutifs (62, 64, 66) sont tous différents les uns des autres.

16. Courroie d'ascenseur selon la revendication 14 ou 15, dans laquelle une première partie (72) de chaque rainure est disposée à un premier angle non droit par rapport à l'axe longitudinal et une deuxième partie (74) de chaque rainure est disposée à un deuxième angle non droit par rapport à l'axe longitudinal.
